(19) **Europäisches Patentamt** / **European Patent Office** / **Office européen des brevets**

(11) **EP 2 929 646 B1**

(12) **EUROPEAN PATENT SPECIFICATION**

(45) Date of publication and mention of the grant of the patent:
**24.02.2021 Bulletin 2021/08**

(51) Int Cl.:
*H04L 7/02* (2006.01)   *H04J 3/06* (2006.01)
*G06F 13/42* (2006.01)   *H04L 1/00* (2006.01)
*H04L 1/18* (2006.01)

(21) Application number: **12889588.5**

(22) Date of filing: **06.12.2012**

(86) International application number:
**PCT/CN2012/086027**

(87) International publication number:
**WO 2014/086017 (12.06.2014 Gazette 2014/24)**

(54) **MOTION CONTROL SYSTEM USING ASYNCHRONOUS COMMUNICATION AND CONTROLLER AND METHOD THEREOF**

BEWEGUNGSSTEUERUNGSSYSTEM MIT ASYNCHRONER KOMMUNIKATION UND STEUERUNG UND VERFAHREN DAFÜR

SYSTÈME DE COMMANDE DE MOUVEMENT UTILISANT UNE COMMUNICATION ASYNCHRONE, ET CONTRÔLEUR ET PROCÉDÉ CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.10.2015 Bulletin 2015/42**

(73) Proprietor: **ABB Schweiz AG**
**5400 Baden (CH)**

(72) Inventors:
• **ZAHRAI, Said**
  **Shanghai 200135 (CN)**
• **ZHANG, Feihong**
  **Shanghai 200129 (CN)**
• **ZHANG, Yicheng**
  **Shanghai 201318 (CN)**
• **SU, Chengping**
  **Shanghai 201315 (CN)**
• **MA, Bojun**
  **Shanghai 201315 (CN)**
• **YANG, Chao**
  **Shanghai 200240 (CN)**
• **ZHANG, Hui**
  **West Hartford, Connecticut 06117 (US)**

(74) Representative: **Zimmermann & Partner Patentanwälte mbB**
**Postfach 330 920**
**80069 München (DE)**

(56) References cited:
**WO-A1-2005/114890     CN-A- 101 192 912**
**US-B1- 6 247 082**

• **FUMIO KANEHIRO ET AL: "Distributed Control System of Humanoid Robots based on Real-time Ethernet", INTELLIGENT ROBOTS AND SYSTEMS, 2006 IEEE/RSJ INTERNATIONAL CONFERENCE ON, IEEE, PI, 1 October 2006 (2006-10-01), pages 2471-2477, XP031006469, ISBN: 978-1-4244-0258-8**

## Description

## Technical Field

The invention relates to the field of motion control system, and more particularly to the field of a motion control system using asynchronous communication and method thereof.

## Background Art

In conventional motion control systems, the complete system is divided into subsystems that are in communication with each other and need to act and react to each other. For systems where there is a constraint on the temporal behaviour, the interaction must be done in a controlled manner within a given time interval. When the number of devices increases in the system, the problems become more complex; a practical solution is to have a minimum period of time for the fastest part of the system and the slower parts will have multiple of that as their own cycle time.

While the above strategy could work in general, it has at least the following disadvantages.

If the number of the units with different period increases, it adds to the complexity of the system. In particular, adding new components to the system becomes more difficult as the history must be respected. As an example in an automated machine one might have a regulation period suitable for the process, but not a pure fraction of second, like 85 micro seconds. The set values can be calculated less often with a period being a multiple of the regulation period, like 170, 340, 680 microseconds or larger. The communication to the drive system which delivers the position data should then follow these timing schedules.

As long as the whole system is proprietary, this will not cause any problem, but once the system is expected to interact with other systems, it will become an issue.

An alternative solution methodology would be to have the system interrupt driven. This of course solves the issue, but adds other type of complexity to the system. Interrupt priorities must be chosen very carefully and computing power must be such so that the worst case of having all interrupts at the same time can be handled without any functional failures. This leads to needs for over-specification of the system and less control on temporal behaviour of the system.

Further, the system must be designed so that missing one train of data would not lead to complete system failure. This needs strategies like extrapolation of old data or re-use of the same data.

US 6,247,082 B1 discloses a method and a circuit for providing handshaking to transact information across multiple clock domains using asynchronous communication. The known system includes a first computer subsystem in a first clock domain and a second computer subsystem in a second clock domain. Between said computer subsystems is located a handshake circuit comprising two interface circuits. The handshake circuit is adapted to provide the required handshake signals to control the transfer of data between the first domain which is a master and the second domain which is a slave.

F. Kanehiro, Y. Ishiwata, H. Saito, K. Akachi, G. Miyamori, T. Isozumi, K. Kaneko, and H. Hirukawa, "Distributed Control System of Humanoid Robots based on Real-time Ethernet," in IEEE/RSJ International Conference on Intelligent Robots and Systems, 2006, pp. 2471-2477, deals with real-time communication on Ethernet and develops an onbody distributed control system for a humanoid robot, HRP-3P. Real-time communication on Ethernet is realized by a communication method using the data link layer directly and timing control using a real-time operating system ARTLinux. This enables to reduce the cost of embedded systems and improve developmental efficiency. A CORBA implementation which works on this communication layer is also developed to increase compatibility with existing software. Moreover, a small-size distributed robot controller is developed for the onbody network of HRP-3P and a distributed I/O system is developed on top of this.

## Brief Summary of the Invention

It is therefore an objective of the invention to provide a motion control system using asynchronous communication according to claim 1 and methods thereof according to claim 6.

By having the configuration as above, it can provide at least one of the technical effects as: 1. asynchronous communication between the first controller and the second controller; 2. the two controllers with different clock rates can communicate with each other; 3. avoidance of lost data by retransmitting the data at a frequency higher than the frequency at which the data are prepared or are to be consumed; 4. the reuse of the interval between the first clocks for transmission of the data at a series of the second clocks.

## Brief Description of the Drawings

This invention is defined and limited by the scope of the appended independent claims. In the following description any embodiment(s) referred to and not falling within the scope of the appended claims, is (are) merely example(s) used for the understanding of the invention. The subject matter of the invention will be explained in more detail in the following text with reference to preferred exemplary embodiments which are illustrated in the drawings, in which:

Figure 1 illustrates a block diagram for a motion control system using asynchronous communication according to an embodiment of present invention;

Figure 2 illustrates a scheduling scheme for communication between the first controller and the second controller according to figure 1;

Figure 3 illustrates a block diagram in module level for the motion control system according to figure 1; and

Figure 4 depicts an exemplary scheduling scheme for the process according to an embodiment of present invention.

The reference symbols used in the drawings, and their meanings, are listed in summary form in the list of reference symbols. In principle, identical parts are provided with the same reference symbols in the figures.

**Preferred Embodiments of the Invention**

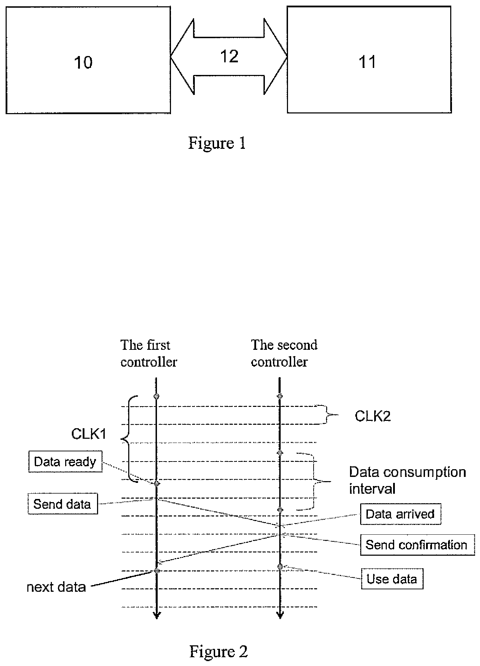

Figure 1 illustrates a block diagram for a motion control system using asynchronous communication according to an embodiment of present invention. As shown in figure 1, the motion control system 1 includes a first controller 10 and a second controller 11. For example, the first controller 10 and the second controller 11 may be implemented by programmable chip such as field-programmable gate array (FPGA) or application-specific integrated circuit (ASIC) or a combination of such and a Central Processing Unit. Such hardware is an integrated circuit designed to be configured by a customer or a designer after manufacturing-hence "field-programmable", such that it is able to execute desired functionality, such as controlling, communication, sensing, data-processing and so on. The first controller 10 and the second controller 11 are linked via network 12, such as fieldbus. Fieldbus is a family of industrial communication network protocols used here for real-time distributed control.

Figure 2 illustrates a scheduling scheme for communication between the first controller and the second controller according to figure 1. As shown in figure 2, the first controller 10 is adapted for preparing a multiple of data sequentially at a series of first clocks CLK1 and keeping transmitting the data to the second controller 11 at a series of second clocks CLK2 until the first controller 10 receives a confirmation sent by the second controller 11; the second controller 11 is adapted for receiving the data transmitted by the first controller 10 and acknowledging correct receipt of the data by returning the confirmation to the first controller 10; an interval among the series of first clocks CLK 1 is longer than an interval among the series of the second clocks CLK 2 and shorter than or equal to the interval over which the data is consumed. The first controller 10 is further adapted for transmitting the next data in response to that the first controller 10 receives the second controller's confirmation for correct receipt of the current data. In an interval between the first clocks, the data are transmitted by the first controller 10 at a series of the second clocks until they are correctly received by the second controller 11. By having the configuration as above, it can provide at least one of the technical effects as: 1. asynchronous communication between the first controller and the second controller; 2. the two controllers with different clock rates can communicate with each other; 3. avoidance of lost data by retransmitting the data at a frequency higher than the frequency at which the data are prepared or are to be consumed; 4. the reuse of the interval between the first clocks for transmission of the data at a series of the second clocks.

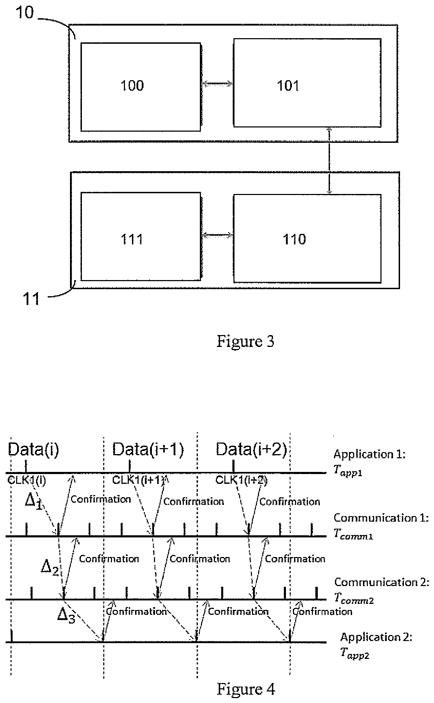

Figure 3 illustrates a block diagram in module level for the motion control system according to figure 1. As shown by figure 3, the first controller 10 comprises a first application module 100 and a first communication module 101; the second controller 11 comprises a second communication module 110. The hardware of the first controller 10 and the second controller 11, such as field-programmable gate array (FPGA) or application-specific integrated circuit (ASIC) or a combination of such and a Central Processing Unit, can be module programmed by separating the functionality of a program into independent, interchangeable modules, such that each contains everything necessary to execute only one aspect of the desired functionality. The first controller 10 is module programed such that: the first application module 100 is adapted for the data preparation and sending the data to the first communication module 101 in response to the data preparation, and the first communication module 101 is adapted for receiving the data and the transmission of the data at the series of second clocks. The second controller 11 is module programed such that the second communication module 110 is adapted for the receipt of the data and the acknowledgment of the correct receipt of the data.

For example, the first application module may be adapted for preparing data Data(i) sequentially at CLK1(i) of a series of first clocks, wherein i is a natural number indicating the index ranging from 0 to N. The first application module 100 may be adapted for sending Data(i) to the first communication module 101 in response to the preparation of Data(i), for example when/after the corresponding data preparation is done. The first communication module may be adapted for transmitting Data(i) at the series of second clocks CLK2 to the second communication module 110. The second communication module 110 may be adapted for receiving the Data(i) and acknowledging the correct receipt of Data(i). In response to that the first communication module 101 receives the confirmation of correct receipt of Data(i) by the second communication module 110, the first communication module 101 is adapted for stopping sending Data(i) until it receives Data(i+1) sent by the first application module 100, and the same process is performed for Data(i+1). By having the controllers module programed, in particular separating the communication module from the application module, it is helpful for creation of efficient and time accurate communication and synchronization.

Further referring to figure 3, the second controller 11 further comprises a second application module 111 by modular programming. The second communication module 110 is further adapted for storing the data in a queue of memory units. Memory units may be used for the storage of data. The second application module 111 is adapted for accessing the data stored in the queue of the memory units, consuming the data at an interval longer than or equal to that among the series of the first clocks, and the transmission operation of the first application module 100 and the consumption operation of the second application module 111 are independent. For example, the second communication module 110 may be adapted for storing Data(i) in the memory M(i), alternatively it may be adapted for storing Data(i) in the memory in stack. The second application module 111 may be adapted for accessing Data(i) by referring to the index "i" and extracting the task information and its execution time from Data(i). By having such configuration, it can bring about at least one of the technical effects as: 1. the first controller and the second controller can be synchronized without having either the same clock rate or a multiple of clock rate of one to the other, 2. the second application module can get right data on-time.

Preferably, the second application module 111 is further adapted for consuming the data stored in the queue of the memory units in the same sequence as the data are stored, and releasing the memory unit when the data stored therein are consumed. In addition, the data at least have the information about the task and its execution time. By having such configuration and a distributed clock in the system, the second application module is able to give instruction for execution of the task at the execution time by extracting such information from the data it receives. Distributed clocks are services provided in some field buses and allow a distributed system running on several hardware share the same clock. The service usually automatically corrects the clocks and removes deviations due to inaccuracies of the hardware and oscillators that otherwise will accumulate.

In a common embodiment, according to the intended direction of the information flow, a master may switch between the roles between the first controller and the second controller and a slave may switch between the roles between the second controller and the first controller. By having this switching mechanism, the master and the slave may behave as a transmitter and a receiver or vice versa during the communication. The master can be a standard Programmable Logic Controller without hard requirements of the PLC scan time.

The slave can for example be a multi axis drive unit connected in series with other standard drive systems. The proposed arrangement eliminated needs for specific adjustments.

In particular, for example, the first controller 10 is a main controller being further adapted for preparing the data representing robot motion information and execution time, and the second controller 11 is an axis motion controller being further adapted for providing control data to drive a mechanical device based on the robot motion information and the execution time extracted from the data received from the main controller. If the main controller needs feedback from the slave controller, then the main controller switches its role from the first controller to the second controller and correspondingly the axis motion controller switches its role from the second controller to the first controller.

As an alternative, the first controller 10 is a main controller being further adapted for preparing the data representing high level control task and its execution time based on an interaction with users and other systems; and the second controller 11 is an axis motion controller being further adapted for controlling electrical motors to achieve the requested motion at the execution time based on the high level control task and its execution time extracted from the data received. A high level task can be the program provided by the user, who requests well defined motion of the robot when certain conditions are fulfilled. Example of such can be that existence of work-piece is confirmed by a signal and the safety system allows starting motion of the robot. The main controller will check the conditions by reading inputs from sensors and in case of positive result will command the drive to start moving the robot. If the main controller needs feedback from the slave controller, then the main controller switches its role from the first controller to the second controller and correspondingly the axis motion controller switches its role from the second controller to the first controller.

Figure 4 depicts an exemplary scheduling scheme for the process according to an embodiment of present invention. As shown in figure 4, the first controller and the second controller can operate to preparing a multiple of data sequentially at a series of first clocks CLK1, keeping transmitting the data at a series of second clocks CLK2 until it receives a confirmation, receiving the data and acknowledging correct receipt of the data by returning the confirmation. The interval among the series of first clocks CLK1 is longer than the interval among the series of the second clocks CLK2. For example, such process includes the steps as below: preparing Data(i) at CLK1(i) of a series of first clocks, wherein i is a natural number indicating the index ranging from 0 to N; Sending Data(i) in response to the preparation of Data(i), for example when/after the corresponding data preparation is done, at the series of second clocks CLK2; receiving the Data(i) and acknowledging the correct receipt of Data(i); in response to the confirmation of correct receipt of Data(i), stopping sending Data(i) until it receives Data(i+1), and the same process is performed for Data(i+1), Data(i+2).... By having the controllers module programed, in particular separating the communication module from the application module, it is helpful for creation of efficient and time accurate communication and synchronization. This process can provide at least one of the technical effects as: 1. asynchronous communication between the first controller and the second controller; 2. the two controllers with different clock rates can communicate with each other; 3. avoidance of lost data by retransmitting the data at a frequency higher than the frequency at which the data are prepared; 4. the reuse of the interval between the first clocks for transmission of the data at a series of the second clocks.

Further referring to figure 4, the process further includes storing the correctly received data in a queue of memory units. In addition, such process further includes accessing the data stored in the queue of the memory units, consuming the data at interval longer than or equal to that among the series of the first clock. For example, the process further includes the steps as below: storing Data(i) in the memory M(i), alternatively it may be adapted for storing Data(i) in the memory in stack. The second application module 11 may be adapted for accessing Data(i) by referring to the index "i" and extracting the task information and its execution time from Data(i). This approach provides at least one of the technical effects as: 1. the first controller and the second controller can be synchronized without having either the same clock rate or a multiple of clock rate of one to the other, 2. the second controller can get right data on-time.

Preferably, the consumption of the data stored in the queue of the memory units is in the same sequence as the data are stored.

The process may further includes providing control data to drive a mechanical device based on the robot motion information and the execution time extracted from the data received, wherein: the data represent robot motion information and execution time.

The process may further includes controlling electrical motors to achieve the requested motion at the execution time based on the high level control task and its execution time extracted from the data received.

Further referring to figure 4, the first application module 100 and the first communication module 101 are implemented in the first controller 10. The second application module 111 and the second communication module 110 are implemented in a separate second controller 11. The two controllers have two different internal cycle times, denoted by $T_{app1}$ and $T_{app2}$.

Without specific synchronization, the data transmission delay is changing due to different start time of each component. As shown in Fig 1, $\Delta_1$ is time delay for data transmission from the first application module 100 to the first communication module 101, $\Delta_2$ is time delay for data transmission from the first communication module 101 to the second communication module 110, and $\Delta_3$ is time delay for data transmission from the second communication module 110 to the second application module 111. Starting from these, it is easily come to following formula:

$$\text{Max}\,(\Delta_1) = T_{comm1}$$

$$\text{Max}\,(\Delta_2) = T_{comm2}$$

$$\text{Max}\,(\Delta_3) = T_{app2}$$

$$T_{Delay} = \Delta_1 + \Delta_2 + \Delta_3$$

$$\text{Max}\,(T_{Delay}) = T_{app2} + T_{comm2} + T_{comm1}$$

To make sure the second application module 111 get right data on-time from the first application module 100 every clock, the synchronization mechanism is as following:

The first application module 100 prepare Data(N) for time $2^* \text{Max}\,(T_{Delay})$ each clock. The Data(N) is break into small pieces, time of each piece is $T_{app2}$, Let M be no of the pieces, then M = Ceil ($2^* \text{Max}\,(T_{Delay})$ / $T_{app2}$). If last piece is less than $T_{app2}$, ask the first application module 100 for more data to make it equal to $T_{app2}$. Mark each piece with Unique Clock count(N, N+1, N+2, ..., N+M) respectively to be Frame(N). The first communication module 101 send Frame(N) to the second communication module 110 each clock. The second communication module 110 put the Frame(N) in memory, mark as Buffer(N+M), each item in the buffer is pieces of data. The second application module 111 consume one piece of data in Buffer(N+M), according unique clock count, which means it consume Piece(N) at clock N, Piece(n+1) at clock N+1. In this way, the Application 2 will always get right data on-time.

Though the present invention has been described on the basis of some preferred embodiments, those skilled in the art should appreciate that those embodiments should by no way limit the scope of the present invention. Without departing from the concept of the present invention, any variations and modifications to the embodiments should be within the apprehension of those with ordinary knowledge and skills in the art, and therefore fall in the scope of the present invention which is defined by the accompanied claims.

**Claims**

1. A motion control system for a robot and using asynchronous communication, including:

a first controller (10), being adapted for preparing a multiple of data sequentially at a series of first clocks and keeping transmitting the data at a series of second clocks until it receives a confirmation;
a second controller (11), being adapted for receiving the data and acknowledging correct receipt of the data by returning the confirmation; wherein:

an interval among the series of first clocks is longer than an interval among the series of the second clocks;
the first controller (10) comprises a first application module (100) and a first communication module (101);
the second controller (11) comprises a second communication module (110) and a second application module (111);

wherein:

the first application module (100) is adapted for the data preparation and sending the data to the first communication module (101) in response to the data preparation;
the first communication module (101) is adapted for receiving the data and the transmission of the data at the series of second clocks;
the second communication module (110) is adapted for the receipt of the data and the acknowledgment of the correct receipt of the data and

is further adapted for storing the data in a queue of memory units;
the second application module (111) is adapted for accessing the data stored in the queue of the memory units, consuming the data at an interval longer than that among the series of the first clocks, wherein the second application module (111) is further adapted for consuming the data stored in the queue of the memory units in the same sequence as the data are stored;
the transmission operation of the first application module (100) and the consumption operation of the second application module (111) are independent; and the data at least have the information about the task and its execution time.

2. The motion control system according to claim 1, further including:
a fieldbus (12), being configured to link the first controller (10) and the second controller (11);
wherein:

the first controller (10) is a master and the second controller (11) is a slave or
the second controller (11) is a master and the first controller (10) is a slave.

3. The motion control system according to claim 1, wherein:
the first controller (10) is further adapted for transmitting the next data in response to that it receives the second controller's (11) confirmation for correct receipt of the current data.

4. The motion control system according to claim 1, wherein:

the first controller (10) is a main controller, being further adapted for preparing the data representing robot motion information and execution time; and
the second controller (11) is an axis motion controller, being further adapted for providing control data to drive a mechanical device based on the robot motion information and the execution time extracted from the data received from the main controller (10).

5. The motion control system according to claim 1, wherein:

the first controller (10) is a main controller, being further adapted for preparing the data representing high level control task and its execution time based on an interaction with users and other systems; and
the second controller (11) is an axis motion controller, being further adapted for controlling electrical motors to achieve the requested motion at the execution time based on the high level control task and its execution time extracted from the data received.

6. An asynchronous communication method for a robot, including the steps of:

(a) preparing a multiple of data sequentially at a series of first clocks and in response to the data preparation keeping transmitting the data at a series of second clocks until a confirmation is received; and
(b) receiving the data and acknowledging correct receipt of the data by returning the confirmation;
wherein;
an interval among the series of first clocks is longer than an interval among the series of the second clocks;
step (b) includes:

storing the correctly received data in a queue of memory units;
and the method further includes:

(c) accessing the data stored in the queue of the memory units, consuming the data at interval longer than that among the series of the first clock, wherein the consumption of the data stored in the queue of the memory units is in the same sequence as the data are stored;

wherein the transmission operation and the consumption operation are independent; and wherein the data at least have the information about the task and its execution time.

7. The asynchronous communication method according to claim 6, wherein:

the data represent robot motion information and execution time;
it further includes step (d):
providing control data to drive a mechanical device based on the robot motion information and the execution time extracted from the data received.

8. The asynchronous communication method according to claim 6, wherein:

the data represent high level control task and its execution time based on an interaction with users and other systems;
it further includes step (d):
controlling electrical motors to achieve the requested motion at the execution time based on the high level control task and its execution time extracted from the data received.

**Patentansprüche**

1. Bewegungssteuerungssystem für einen Roboter und unter Verwendung asynchroner Kommunikation, umfassend:

eine erste Steuervorrichtung (10), die dazu ausgelegt ist, ein Vielfaches von Daten sequentiell bei einer Reihe von ersten Takten aufzubereiten und die Daten bei einer Reihe von zweiten Takten fortlaufend zu übertragen, bis sie eine Bestätigung empfängt;
eine zweite Steuervorrichtung (11), die zum Empfangen der Daten und Bestätigen des korrekten Empfangs der Daten durch Zurücksenden der Bestätigung ausgelegt ist;
wobei:

ein Intervall zwischen der Reihe der ersten Takte länger als ein Intervall zwischen der Reihe der zweiten Takte ist;
die erste Steuervorrichtung (10) ein erstes Anwendungsmodul (100) und ein erstes Kommunikationsmodul (101) umfasst;
die zweite Steuervorrichtung (11) ein zweites Kommunikationsmodul (110) und ein zweites Anwendungsmodul (111) umfasst;

wobei:

das erste Anwendungsmodul (100) für die Datenaufbereitung und als Reaktion auf die Datenaufbereitung für das Senden der Daten an das erste Kommunikationsmodul (101) ausgelegt ist;
das erste Kommunikationsmodul (101) zum Empfangen der Daten und für die Übertragung der Daten bei der Reihe der zweiten Takte ausgelegt ist;
das zweite Kommunikationsmodul (110) für den Empfang der Daten und die Bestätigung des korrekten Empfangs der Daten ausgelegt ist und ferner für das Speichern der Daten in einer Warteschlange von Speichereinheiten ausgelegt ist;
das zweite Anwendungsmodul (111) dazu ausgelegt ist, auf die in der Warteschlange der Speichereinheiten gespeicherten Daten zuzugreifen und die Daten in einem Intervall zu verarbeiten, das länger als das zwischen der Reihe der ersten Takte ist, wobei das zweite Anwendungsmodul (111) ferner dazu ausgelegt ist, die in der Warteschlange der Speichereinheiten gespeicherten Daten in der gleichen Reihenfolge zu verarbeiten, in der die Daten gespeichert sind;
die Übertragungsoperation des ersten Anwendungsmoduls (100) und die Verarbeitungsoperation des zweiten Anwendungsmoduls (111) unabhängig sind; und
die Daten mindestens die Informationen über die Aufgabe und ihre Ausführungszeit aufweisen.

2. Bewegungssteuerungssystem gemäß Anspruch 1, ferner enthaltend:

einen Feldbus (12), der dazu ausgelegt ist, die erste Steuervorrichtung (10) und die zweite Steuervorrichtung (11) zu verbinden;
wobei:
die erste Steuervorrichtung (10) ein Master ist und die zweite Steuervorrichtung (11) ein Slave ist oder die zweite Steuervorrichtung (11) ein Master ist und die erste Steuervorrichtung (10) ein Slave ist.

3. Bewegungssteuerungssystem gemäß Anspruch 1, wobei:
die erste Steuervorrichtung (10) ferner zum Übertragen der nächsten Daten als Reaktion darauf, dass sie die Bestätigung der zweiten Steuervorrichtung (11) für den korrekten Empfang der aktuellen Daten empfängt, ausgelegt ist.

4. Bewegungssteuerungssystem gemäß Anspruch 1, wobei:

die erste Steuervorrichtung (10) eine Hauptsteuervorrichtung ist, die ferner zum Aufbereiten der die Roboterbewegungsinformationen und die Ausführungszeit repräsentierenden Daten ausgelegt ist; und
die zweite Steuervorrichtung (11) eine Achsenbewegungssteuervorrichtung ist, die ferner zum Bereitstellen von Steuerdaten zum Ansteuern einer mechanischen Vorrichtung basierend auf den Roboterbewegungsinformationen und der Ausführungszeit, die aus den aus der Hauptsteuervorrichtung (10) empfangenen Daten extrahiert wurden, ausgelegt ist.

5. Bewegungssteuerungssystem gemäß Anspruch 1, wobei:

die erste Steuervorrichtung (10) eine Hauptsteuervorrichtung ist, die ferner zum Aufbereiten der Daten ausgelegt ist, die die Steuerungsaufgabe auf hoher Ebene und ihre Ausführungszeit basierend auf einer Interaktion mit Benutzern und anderen Systemen repräsentieren; und
die zweite Steuervorrichtung (11) eine Achsenbewegungssteuervorrichtung ist, die ferner zum Steuern von Elektromotoren ausgelegt ist, um die angeforderte Bewegung zur Ausführungszeit basierend auf der aus den empfangenen Daten extrahierten Steuerungsaufgabe auf hoher Ebene und ihrer Ausführungszeit zu erreichen.

6. Asynchrones Kommunikationsverfahren für einen Roboter, das die folgenden Schritte enthält:

(a) sequentielles Aufbereiten eines Vielfachen von Daten bei einer Reihe von ersten Takten und als Reaktion auf das Aufbereiten der Daten fortlaufendes Senden der Daten bei einer Reihe von zweiten Takten, bis eine Bestätigung empfangen wird; und
(b) Empfangen der Daten und Bestätigen des korrekten Empfangs der Daten durch Zurücksenden der Bestätigung;
wobei:

ein Intervall zwischen der Reihe der ersten Takte länger als ein Intervall zwischen der Reihe der zweiten Takte ist;
Schritt (b) enthält:

Speichern der korrekt empfangenen Daten in einer Warteschlange von Speichereinheiten;
und das Verfahren ferner enthält:

(c) Zugreifen auf die in der Warteschlange der Speichereinheiten gespeicherten Daten und Verarbeiten der Daten in einem Intervall, das länger als das zwischen der Reihe der ersten Takte ist, wobei die Verarbeitung der in der Warteschlange der Speichereinheiten gespeicherten Daten in der gleichen Reihenfolge erfolgt, in der die Daten gespeichert sind;
wobei die Übertragungsoperation und die Verarbeitungsoperation unabhängig sind und wobei die Daten mindestens die Informationen über die Aufgabe und ihre Ausführungszeit aufweisen.

7. Asynchrones Kommunikationsverfahren gemäß Anspruch 6, wobei:

die Daten Roboterbewegungsinformationen und Ausführungszeit repräsentieren;
es ferner Schritt (d) enthält:
Bereitstellen von Steuerdaten zum Ansteuern einer mechanischen Vorrichtung basierend auf den aus den empfangenen Daten extrahierten Roboterbewegungsinformationen und der Ausführungszeit.

8. Asynchrones Kommunikationsverfahren gemäß Anspruch 6, wobei:

die Daten eine Steuerungsaufgabe auf hoher Ebene und deren Ausführungszeit basierend auf einer Interaktion mit Benutzern und anderen Systemen repräsentieren;
es ferner Schritt (d) enthält:
Steuern von Elektromotoren, um die angeforderte Bewegung zur Ausführungszeit basierend auf der aus den empfangenen Daten extrahierten Steuerungsaufgabe auf hoher Ebene und ihrer Ausführungszeit zu erreichen.

**Revendications**

1. Système de commande de mouvement pour un robot et utilisant une communication asynchrone, incluant :

un premier dispositif de commande (10), adapté pour préparer un multiple de données séquentiellement, dans une série de premières horloges, et continuer de transmettre les données, dans une série de secondes horloges, jusqu'à ce qu'il reçoive une confirmation ;

un second dispositif de commande (11), adapté pour recevoir les données et accuser la réception correcte des données en renvoyant la confirmation ;

dans lequel :

un intervalle parmi la série de premières horloges est plus long qu'un intervalle parmi la série des secondes horloges ;

le premier dispositif de commande (10) comprend un premier module d'application (100) et un premier module de communication (101) ;

le second dispositif de commande (11) comprend un second module de communication (110) et un second module d'application (111) ;

dans lequel :

le premier module d'application (100) est adapté pour la préparation de données et envoyer les données au premier module de communication (101) en réponse à la préparation de données ;

le premier module de communication (101) est adapté pour recevoir les données et la transmission des données, dans la série de secondes horloges ;

le second module de communication (110) est adapté pour la réception des données et l'accusé de la réception correcte des données et est en outre adapté pour stocker les données dans une file d'unités de mémoire ;

le second module d'application (111) est adapté pour accéder aux données stockées dans la file des unités de mémoire, consommer les données à un intervalle plus long que celui parmi la série des premières horloges, dans lequel le second module d'application (111) est en outre adapté pour consommer les données stockées dans la file des unités de mémoire dans la même séquence que celle dans laquelle les données sont stockées ;

l'opération de transmission du premier module d'application (100) et l'opération de consommation du second module d'application (111) sont indépendantes ; et

les données ont au moins les informations concernant la tâche et leur temps d'exécution.

2. Système de commande de mouvement selon la revendication 1, incluant en outre :

un bus de terrain (12), configuré pour lier le premier dispositif de commande (10) et le second dispositif de commande (11) ;

dans lequel :

le premier dispositif de commande (10) est un maître et le second dispositif de commande (11) est un esclave ou le second dispositif de commande (11) est un maître et le premier dispositif de commande (10) est un esclave.

3. Système de commande de mouvement selon la revendication 1, dans lequel :

le premier dispositif de commande (10) est en outre adapté pour transmettre les données suivantes en réponse au fait qu'il reçoit la confirmation du second dispositif de commande (11) pour la réception correcte des données actuelles.

4. Système de commande de mouvement selon la revendication 1, dans lequel :

le premier dispositif de commande (10) est un dispositif de commande principal, en outre adapté pour préparer les données représentant des informations de mouvement de robot et un temps d'exécution ; et

le second dispositif de commande (11) est un dispositif de commande de mouvement axial, en outre adapté pour fournir des données de commande pour entraîner un dispositif mécanique sur la base des informations de mouvement de robot et du temps d'exécution extraits des données reçues du dispositif de commande principal (10).

5. Système de commande de mouvement selon la revendication 1, dans lequel :

le premier dispositif de commande (10) est un dispositif de commande principal, en outre adapté pour préparer les données représentant une tâche de commande de haut niveau et son temps d'exécution sur la base d'une interaction avec des utilisateurs et d'autres systèmes ; et

le second dispositif de commande (11) est un dispositif de commande de mouvement axial, en outre adapté pour commander des moteurs électriques pour accomplir le mouvement demandé au temps d'exécution sur la base de la tâche de commande de haut niveau et de son temps d'exécution extraits des données reçus.

6. Procédé de communication asynchrone pour un robot, incluant les étapes de :

(a) la préparation d'un multiple de données séquentiellement, dans une série de premières horloges, et, en réponse à la préparation de données, la continuation de transmettre les données, dans une série de secondes horloges, jusqu'à ce qu'une confirmation soit reçue ; et
(b) la réception des données et l'accusé de la réception correcte des données en renvoyant la confirmation ;
dans lequel :

un intervalle parmi la série de premières horloges est plus long qu'un intervalle parmi la série des secondes horloges ;
l'étape (b) inclut :

le stockage des données correctement reçues dans une file d'unités de mémoire ;
et le procédé inclut en outre :

(c) l'accès aux données stockées dans la file des unités de mémoire, la consommation des données à un intervalle plus long que celui parmi la série des premières horloges, dans lequel la consommation des données stockées dans la file des unités de mémoire est dans la même séquence que celle dans laquelle les données sont stockées ;

dans lequel l'opération de transmission et l'opération de consommation sont indépendantes ; et dans lequel les données ont au moins les informations concernant la tâche et son temps d'exécution.

7. Procédé de communication asynchrone selon la revendication 6, dans lequel :

les données représentent des informations de mouvement de robot et un temps d'exécution ;
il inclut en outre l'étape (d) :
la fourniture de données de commande pour entraîner un dispositif mécanique sur la base des informations de mouvement de robot et du temps d'exécution extraits des données reçues.

8. Procédé de communication asynchrone selon la revendication 6, dans lequel :

les données représentent une tâche de commande de haut niveau et son temps d'exécution sur la base d'une interaction avec des utilisateurs et d'autres systèmes ;
il inclut en outre l'étape (d) :
la commande de moteurs électriques pour accomplir le mouvement demandé au temps d'exécution sur la base de la tâche de commande de haut niveau et de son temps d'exécution extraits des données reçues.

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6247082 B1

### Non-patent literature cited in the description

- **F. KANEHIRO ; Y. ISHIWATA ; H. SAITO ; K. AKACHI ; G. MIYAMORI ; T. ISOZUMI ; K. KANEKO ; H. HIRUKAWA.** Distributed Control System of Humanoid Robots based on Real-time Ethernet. *IEEE/RSJ International Conference on Intelligent Robots and Systems,* 2006, 2471-2477